# EUROPÄISCHE PATENTSCHRIFT

(11) **EP 4 088 885 B1**
(45) Veröffentlichungstag und Bekanntmachung des Hinweises auf die Patenterteilung: **12.08.2026**
(21) Anmeldenummer: 22169136.3
(22) Anmeldetag: 21.04.2022
(51) Int. Cl.: B25J 9/16, G05B 19/418, B25J 5/00, B25J 19/02, B25J 9/04, B65G 1/137, B66F 9/06, B66F 9/075, B66F 9/18, B65G 61/00

(54) **VERFAHREN UND SYSTEM ZUM KOMMISSIONIEREN VON STÜCKGÜTERN**
METHOD AND SYSTEM FOR PICKING PIECE GOODS
PROCÉDÉ ET SYSTÈME DE PRÉPARATION DE COMMANDES DE PIÈCES

(30) Priorität: 10.05.2021 DE 102021112076
(43) Veröffentlichungstag der Anmeldung: 16.11.2022
(73) Patentinhaber: Linde Material Handling GmbH, 63743 Aschaffenburg (DE)
(72) Erfinder: TREBER, Florian, 63739 Aschaffenburg (DE); BROCKEL, Sascha, 63906 Erlenbach a. Main (DE); KRUMBHOLZ, Peter, 63869 Jakobsthal (DE); GROH, Jonas, 63743 Aschaffenburg (DE)
(74) Vertreter: Patentship Patentanwaltgesellschaft

(56) Entgegenhaltungen:
- DE-A1- 102014 111 886
- DE-A1- 102015 220 091
- US-B1- 9 102 055
- SETH TELLER ET AL: "A voice-commandable robotic forklift working alongside humans in minimally-prepared outdoor environments", 2010 IEEE INTERNATIONAL CONFERENCE ON ROBOTICS AND AUTOMATION : ICRA 2010 ; ANCHORAGE, ALASKA, USA, 3 - 8 MAY 2010, IEEE, PISCATAWAY, NJ, USA, 3 May 2010 (2010-05-03), pages 526 - 533, XP031743175, ISBN: 978-1-4244-5038-1

## Beschreibung

Die Erfindung betrifft ein Verfahren zum Kommissionieren von Stückgütern, die auf mindestens einem Quell-Ladungsträger bevorratet und vereinzelt auf mindestens einem Ziel-Ladungsträger abgelegt werden, wobei die Stückgüter mittels einer auf einem autonomen Flurförderzeug angeordneten Sensorik erfasst und mittels einer auf dem autonomen Flurförderzeug angeordneten Handhabungseinrichtung von dem Quell-Ladungsträger aufgenommen und auf dem Ziel-Ladungsträger abgelegt werden.

Außerdem betrifft die Erfindung ein System zur Durchführung des Verfahrens mit mindestens einem Quell-Ladungsträger und mindestens einem Ziel-Ladungsträger sowie einem autonomen Flurförderzeug, auf dem eine Sensorik zur Erfassung der Stückgüter und eine Handhabungseinrichtung zur Handhabung der Stückgüter angeordnet sind.

Unter Kommissionierung versteht man alle Methoden zur Zusammenstellung von bestimmten Objekten, insbesondere von Stückgütern, beispielsweise Packstücken, in Warenlagern, aus einem bereitgestellten Gesamtsortiment. Dabei soll die Zusammenstellung aufgrund von Aufträgen, z.B. Kundenaufträgen oder Produktionsaufträgen erfolgen. In jüngster Zeit werden hierfür vermehrt automatische Systeme eingesetzt. Dabei werden z.B. Packstücke als zu kommissionierende Objekte von autonom oder automatisch betriebenen Kommissionierfahrzeugen von einer Quellposition, insbesondere einem Quell-Ladungsträger, z.B. einer Quellpalette, aufgenommen und auf einem auf dem Kommissionierfahrzeug transportierten Ziel-Ladungsträger, z.B. einer Zielpalette, abgesetzt. Insbesondere werden hierzu mobile Kommissionierroboter verwendet, die die Packstücke selbstständig mittels Roboterarmen von einem Quell-Ladungsträger aufnehmen und anschließend auf einem Ziel-Ladungsträger ablegen können. Diese Kommissionierroboter erhalten die Auftragsdaten wie Auftragsnummer, Koordinaten des Lagerortes, Stückzahl und Gewicht der Güter automatisch von einem Zentralrechner. Sie können z.B. bestimmte Regalfächer in Regallagern gezielt anfahren und das gewünschte Objekt mithilfe eines ein Aufnahmewerkzeug aufweisenden Greifsystems aus dem Regalfach entnehmen.

Das Aufnahmewerkzeug kann als Greifer, beispielsweise als Adhäsionsgreifer oder Vakuumgreifer, ausgebildet sein. Das Greifen der Objekte wird auch als Picken bezeichnet. Das Transferieren der Packstücke von der Quellpalette zur Zielpalette wird auch als Pick & Place - Prozess bezeichnet.

Aus der DE 10 2017 130 577 A1 ist beispielsweise ein mobiler Kommissionierroboter zur automatischen Kommissionierung von Objekten mit einem vertikal ausgerichteten Hubmast und einem daran höhenbeweglich angebrachten, horizontal ausgerichteten Roboterarm mit mehreren aneinander gereihten Armelementen bekannt, welche über Armgelenke mit vertikalen Armgelenksdrehachsen verfügen, wobei das letzte am äußeren Reihenende angeordnete Armelement über ein Handgelenk mit vertikaler Handgelenksdrehachse mit einem Aufnahmewerkzeug zur Aufnahme der Objekte verbunden ist.

Die DE 10 2014 111 886 A1 offenbart ein gattungsgemäßes Verfahren zum Kommissionieren von Stückgütern mit den Merkmalen des Oberbegriffs des Patentanspruchs 1.

Für die Erkennung der jeweiligen zu greifenden Packstücke auf dem Quell-Ladungsträger wird häufig ein Bildverarbeitungssystem mit Sensorik, beispielsweise eine Bildsensorik, und Recheneinheit, ein so genanntes Vision-System, eingesetzt. Damit die Algorithmik des Vision-Systems die Packstücke korrekt erfassen und lokalisieren kann, ist eine bestimmte Scan-Position erforderlich.

Diese Scan-Position ist relativ zur Quellpalette und der obersten Lage der zu erkennenden Packstücke definiert. Diese relative Position muss bei allen Pickstationen über den gesamten Prozess möglichst gleichbleibend und wiederholgenau sein.

Die Lokalisierung und Navigation des automatisierten bzw. autonomen Kommissionierfahrzeugs orientiert sich üblicherweise in einer globalen Karte. In dieser Karte sind die Regalfächer definiert, an denen das Kommissionierfahrzeug den Pick & Place - Prozess durchführen soll. Die globale Lokalisierung und Navigation weist prinzipbedingt Toleranzen auf, so dass mit einer Abweichung in einer horizontalen x-y-Ebene bei der Positionierung vor den Regalfächern zu rechnen ist. Die x-Achse ist hierbei eine horizontale Längsachse und die y-Achse eine horizontale Querachse.

In den Regalfächern werden die eigentlichen Quell-Ladungsträger, z.B. die Quellpaletten, per automatischer oder manueller Nachschubversorgung platziert. Hierbei entstehen wiederum translatorische und rotatorische Toleranzen in der x-y-Ebene.

Aufgrund dieser Toleranzen ist davon auszugehen, dass eine zuverlässige x-y-Positionierung der Sensorik in die Scan-Position relativ zur Quellpalette für die Erkennung der zu greifenden Packstücke ohne weitere Hilfsmittel nicht gegeben ist.

Die erforderliche z-Koordinate der Scan-Position ist ohne weitere Hilfsmittel ebenfalls nicht bekannt.

Für eine automatisierte Kommissionierung mit hoher Zuverlässigkeit ist aber eine gleichbleibende und wiederholgenaue Scan-Position der Sensorik relativ zur jeweiligen Quellpalette und zur obersten Lage der Packstücke auf der Quellpalette erforderlich.

Der vorliegenden Erfindung liegt die Aufgabe zugrunde, ein Verfahren der genannten Art sowie ein System zur Durchführung des Verfahrens so auszugestalten, dass eine automatisierte Kommissionierung mit hoher Genauigkeit ermöglicht wird.

Die Erfindung ist im beigefügten Anspruchssatz beschrieben.

Diese Aufgabe wird verfahrensseitig erfindungsgemäß dadurch gelöst, dass in einem ersten Schritt eine Ladungsträger-Erkennung durchgeführt wird, indem der Quell-Ladungsträger mittels der Sensorik erfasst und durch Auswertung der Sensordaten in einer Datenverarbeitungseinheit erkannt und dessen relative Positionierung zum Flurförderzeug in einer horizontalen x-y-Ebene ermittelt wird, in einem zweiten Schritt eine Höhenerkennung durchgeführt wird, indem in einem vertikalen Abtastvorgang eine vertikale z-Koordinate mittels der Sensorik abgetastet wird, wobei der Abtastvorgang in einer unteren Ausgangsposition beginnt, in welcher der Quell-Ladungsträger im ersten Schritt erkannt wurde, und in einer oberen Endposition endet, in welcher durch Auswertung der Sensordaten in der Datenverarbeitungseinheit eine oberste Ebene der Stückgüter erkannt wird, und in einem dritten Schritt aus den Auswertungen der Sensordaten der Ladungsträger-Erkennung und der Höhenerkennung eine definierte Scan-Position der Sensorik in einem dreidimensionalen Raum bestimmt wird, wobei die Scan-Position relativ zum Quell-Ladungsträger und der obersten Ebene der zu erkennenden Stückgüter definiert ist, und wobei die definierte Scan-Position der Sensorik in dem dreidimensionalen Raum erforderlich ist, damit eine Algorithmik einer Recheneinheit die Stückgüter in der obersten Ebene des Quell-Ladungsträgers zum Greifen durch einen auf der Handhabungseinrichtung angeordneten Greifer korrekt erfasst und lokalisiert.

Auf diese Weise kann die Scan-Position relativ zum Quell-Ladungsträger und der obersten Lage der zu erkennenden Stückgüter definiert werden. Diese relative Position kann bei allen Pickstationen über den gesamten Prozess gleichbleibend und wiederholgenau eingestellt werden.

Zweckmäßigerweise wird für die Sensorik ein optischer Sensor, insbesondere eine 3D-Kamera oder ein 3D-Laserscanner, verwendet. Besonders gut eignet sich hierfür eine 3D-Stereo-Kamera oder eine Structured-Light-Kamera oder eine Time-of-Flight-Kamera. Es ist auch denkbar, einen 3D-Radarsensor einzusetzen.

Vorteilhafterweise wird die Sensorik für den vertikalen Abtastvorgang der Höhenerkennung entlang einer vertikalen z-Achse bewegt.

Alternativ oder zusätzlich kann die Sensorik auch für den vertikalen Abtastvorgang der Höhenerkennung in einer vertikalen Ebene geschwenkt werden. Um die höchste Ebene der Stückgüter zu erreichen und zu detektieren, kann somit anstelle einer Bewegung des Sensors in vertikaler z-Richtung, insbesondere bei einer erhöhten Montage des Sensors, der Sensor geschwenkt werden. Damit können beispielsweise die Bewegung des Roboterarms und die Bewegung des Sensors entkoppelt werden.

Gemäß einer besonders bevorzugten Ausgestaltung der Erfindung wird die Sensorik mit der Handhabungseinrichtung bewegt. Hierzu kann die Sensorik an der, vorzugsweise höhenbeweglichen, Handhabungseinrichtung angebracht sein. Beispielsweise kann die Sensorik mit dem Roboterarm der Handhabungseinrichtung oder einem, höhenbeweglich an einem Hubmast angeordneten, Hubschlitten der Handhabungseinrichtung bewegt werden.

Vorzugsweise wird die Sensorik bei der Ladungsträger-Erkennung mit der Handhabungseinrichtung auf den Quell-Ladungsträger ausgerichtet. Dies ist besonders einfach möglich, wenn die Sensorik mit dem Roboterarm bewegt wird. Insbesondere bei Verwendung eines Roboterarms mit mehreren Armteilen, kann die Sensorik bei Anordnung an einem Armteil, insbesondere am ersten oder letzten Armteil, in alle Himmelsrichtungen ausgerichtet werden und gleichzeitig entlang einer horizontalen z-Achse mit dem Roboterarm bewegt werden.

Bei der Höhenerkennung kann die Sensorik im Verlauf des vertikalen Abtastvorgangs mit der Handhabungseinrichtung auf die Stückgüter ausgerichtet werden.

Zur Durchführung des Kommissioniervorgangs wird das Flurförderzeug zweckmäßigerweise zu dem Quell-Ladungsträger verfahren, wobei die Ladungsträger-Erkennung gestartet wird, sobald das Flurförderzeug in einem vorbestimmten Abstand vom Ladungsträger positioniert ist.

Gemäß einer bevorzugten Weiterbildung des Erfindungsgedankens ist vorgesehen, dass das Flurförderzeug zu dem Quell-Ladungsträger verfahren wird, und die Ladungsträger-Erkennung bereits im Anfahrprozess an eine Pickstation aktiv ist und kontinuierlich nach Ladungsträgern scannt, wobei das Flurförderzeug bei Erkennen des Quell-Ladungsträgers automatisch in einem vorbestimmten Abstand vom erkannten Quell-Ladungsträger positioniert wird. Dadurch kann die globale Navigation des autonomen Flurförderzeugs unterstützt werden. Falls die Ladungsträger-Erkennung einen Quell-Ladungsträger erkannt hat, kann das Flurförderzeug relativ und geregelt auf den erkannten Ladungsträger positionieren. Durch diese Relativnavigation ist es möglich, das Flurförderzeug sehr präzise zu positionieren, auch wenn die globale Navigation des Flurförderzeugs relativ ungenau ist. Eine translatorische Korrektur auf der x-Achse für die Scan-Position wäre dann auch nicht mehr nötig, da dies zuvor das Flurförderzeug übernommen hat. Dadurch kann die Sensorposition flexibler gewählt werden, da in x-Richtung keine Positionskorrektur, z.B. durch den Roboterarm, erfolgen muss.

Die Sensorik kann auch für weitere Funktionen verwendet werden:
Besonders bevorzugt werden die Sensordaten der Sensorik zusätzlich für ein Kollisionsschutzsystem des Flurförderzeugs verwendet. Insbesondere kann durch eine Umgebungserkennung der Regalgeometrie, beispielsweise horizontale und vertikale Regalstreben) eine Kollisionsvermeidung erreicht werden. Hierzu wird mittels der Sensorik die Geometrie des Regals erfasst und in das Flurförderzeug-Koordinatensystem übertragen. Dadurch kann z.B. die Roboterarmsteuerung die Bewegungsplanung entsprechend anpassen, um eine kollisionsfreie Trajektorie zu planen.

Die Sensordaten der Sensorik können auch zusätzlich zur Ladungsträger- und Höhenerkennung auch zur Stückgüter-Erkennung genutzt werden. Auf diese Weise lassen sich insbesondere Bauraum am Roboterarm und Kosten für zusätzliche Sensoren einsparen.

Der Quell-Ladungsträger kann auch mit zusätzlichen Referenzmarken (passiv oder aktiv) ausgestattet werden, um eine Erkennung und Lokalisierung zu erleichtern. Dabei erfasst die Sensorik die auf dem Quell-Ladungsträger vorgesehenen Referenzmarken, welche dann in der Datenverarbeitungseinheit ausgewertet werden.

Die Erfindung betrifft ferner ein System zur Durchführung des Verfahrens mit mindestens einem Quell-Ladungsträger und mindestens einem Ziel-Ladungsträger sowie einem autonomen Flurförderzeug, auf dem eine Sensorik zur Erfassung der Stückgüter und eine Handhabungseinrichtung zur Handhabung der Stückgüter angeordnet sind.

Bei dem System wird die gestellte Aufgabe dadurch gelöst, dass die Sensorik dazu ausgebildet ist, den Quell-Ladungsträger zu erfassen und in einem vertikalen Abtastvorgang eine vertikale z-Koordinate abzutasten, die sich vom Quell-Ladungsträger bis zu einer obersten Ebene der Stückgüter erstreckt, wobei die Sensorik mit einer Datenverarbeitungseinheit in Wirkverbindung steht, welche dazu eingerichtet ist, in einem ersten Schritt durch Auswertung der Sensordaten eine Ladungsträger-Erkennung und Positionsbestimmung des Quell-Ladungsträgers in einer horizontalen x-y-Ebene relativ zum Flurförderzeug durchzuführen, in einem zweiten Schritt durch Auswertung der Sensordaten beim vertikalen Abtastvorgang eine Höhenerkennung durchzuführen, und in einem dritten Schritt aus den Auswertungen der Sensordaten der Ladungsträger-Erkennung und der Höhenerkennung eine definierte Scan-Position der Sensorik in einem dreidimensionalen Raum zu bestimmen, wobei die Scan-Position relativ zum Quell-Ladungsträger und der obersten Ebene der zu erkennenden Stückgüter definiert ist und wobei die definierte Scan-Position der Sensorik in dem dreidimensionalen Raum erforderlich ist, damit eine Algorithmik einer Recheneinheit die Stückgüter in der obersten Ebene des Quell-Ladungsträgers zum Greifen durch einen auf der Handhabungseinrichtung angeordneten Greifer korrekt erfasst und lokalisiert.

Dabei ist die Handhabungseinrichtung zweckmäßigerweise höhenbeweglich ausgebildet, wobei die Sensorik an der Handhabungseinrichtung angebracht ist.

Vorzugsweise umfasst die Handhabungseinrichtung einen vertikal ausgerichteten Hubmast und einen daran höhenbeweglich angebrachten, horizontal ausgerichteten Roboterarm mit mehreren vom Hubmast ausgehend aneinander gereihten Armelementen mit aufsteigender Nummerierung, welche über Armgelenke mit vertikalen Armgelenksdrehachsen mit aufsteigender Nummerierung verfügen, wobei das letzte am äußeren Reihenende angeordnete Armelement über ein Handgelenk mit vertikaler Handgelenksdrehachse mit einem als Greifer ausgebildeten Aufnahmewerkzeug zur Aufnahme der Stückgüter verbunden ist.

In diesem Fall kann die Sensorik mit Vorteil an einem am Hubmast höhenbeweglich angebrachten Hubschlitten angebracht sein.

Eine andere vorteilhafte Ausgestaltung sieht vor, dass die Sensorik an einem Armelement angebracht ist.

Dabei kann die Sensorik am ersten Armelement angebracht sein, um eine hohe Beweglichkeit der Sensorik auch im eingefalteten Zustand des Roboterarms zu erreichen.

Eine besonders hohe Flexibilität der Positionierung der Sensorik wird ermöglicht, wenn die Sensorik am letzten Armelement angebracht ist. Dabei ist die Sensorik vorzugsweise im Bereich des als Greifer ausgebildeten Aufnahmewerkzeugs angebracht, so dass sie wie das Aufnahmewerkzeug in alle Himmelsrichtungen ausgerichtet werden kann.

Die Erfindung bietet eine ganze Reihe von Vorteilen:
Die Erfindung ermöglicht eine präzise Relativ-Lokalisierung des Quell-Ladungsträgers, insbesondere der Quell-Palette, in der x-y-Ebene sowie eine Erkennung der Höhe der gestapelten Ladungen (z-Koordinate).

Außerdem ist eine genaue Positionierung des Roboterarms des Flurförderzeugs in Relation zum Quell-Ladungsträger möglich.

Durch die präzise Ausrichtung der Sensorik kann eine definierte Scan-Position, sowohl translatorisch in x-, y- und z-Richtung als auch rotatorisch um die z-Achse, bestimmt werden.

Die Kollision mit vertikalen Regalstreben und benachbarten Paletten wird vermieden, da die Koordinaten und die Dimension der Quellpalette bekannt sind und somit nur im Bereich der Quellpalette verfahren werden kann. Durch die Kenntnis der Dimension des Quellladungsträgers (z.B. EURO-Palette 800 x 1200 mm) und dessen Positionierung im Raum, kann ein sicherer Verfahrbereich für den Roboterarm oberhalb dieser Quellpalette definiert werden. Hier sind keine Nachbarpaletten oder Regalpfosten zu erwarten. Die Ladungsträger-Erkennung dient also zur Definition der Scan-Position der Sensorik für die Stückgüter-Erkennung, sowie auch als Definition eines sicheren Verfahrbereiches.

Durch die Montage des Sensors am Roboterarm oder am Aufnahmewerkzeug oder am Hubschlitten wird die Bewegungsfähigkeit des Gesamtsystems genutzt, wodurch ein zusätzlicher Aktor zur Bewegung des Sensors vermieden werden kann. Weitere Vorteile und Einzelheiten der Erfindung werden anhand der in den schematischen Figuren dargestellten Ausführungsbeispiele näher erläutert. Hierbei zeigen
- Figur 1: ein autonomes Flurförderzeug und eine Quellpalette sowie eine Zielpalette,
- Figur 2: ein autonomes Flurförderzeug mit einem am ersten Armelement montierten Sensor vor einer Quellpalette in der Draufsicht,
- Figur 3: ein autonomes Flurförderzeug mit einem am letzten Armelement montierten Sensor vor einer Quellpalette in der Draufsicht,
- Figur 4: ein autonomes Flurförderzeug mit einem am ersten Armelement montierten Sensor vor einer Quellpalette in der Seitenansicht,
- Figur 5: ein autonomes Flurförderzeug mit einem am letzten Armelement montierten Sensor vor einer Quellpalette in der Seitenansicht,
- Figur 6: ein autonomes Flurförderzeug mit einem unterhalb am letzten Armelement montierten Sensor vor einer Quellpalette in der Seitenansicht,
- Figur 7: ein autonomes Flurförderzeug mit einem an einem Hubschlitten eines Hubmastes montierten Sensor vor einer Quellpalette in der Draufsicht,
- Figur 8: ein autonomes Flurförderzeug mit einem am ersten Armelement montierten Sensor bei der Erkennung einer obersten Ebene der Stückgüter auf einer Quellpalette in der Seitenansicht und
- Figur 9: ein autonomes Flurförderzeug mit einem am letzten Armelement montierten Sensor bei der Erkennung einer obersten Ebene der Stückgüter auf einer Quellpalette in der Seitenansicht.

In den Figuren sind dieselben Merkmale jeweils mit denselben Bezugsziffern versehen.

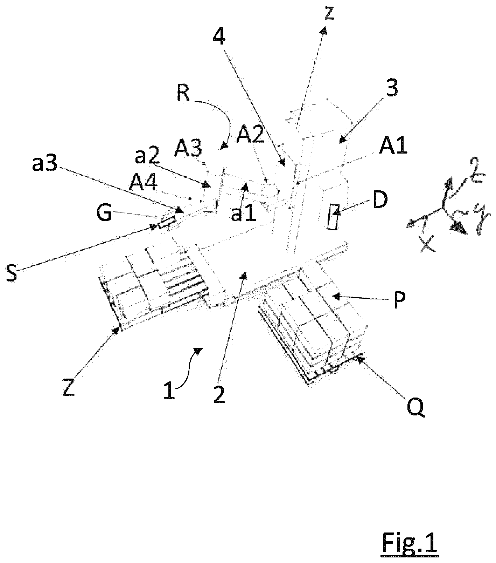

Die Figuren 1 bis 9 zeigen alle ein als autonomer Kommissionierroboter 1 ausgebildetes Flurförderzeug 1 mit einer als Roboterarm R ausgebildeten Handhabungseinrichtung R. Die Flurförderzeuge 1 der einzelnen Figuren unterscheiden sich lediglich in der Montageposition der Sensorik S.

Die Figur 1 zeigt das Flurförderzeug 1 in einer perspektivischen Darstellung. Seitlich neben dem Flurförderzeug 1 befindet sich ein als Quellpalette Q ausgebildeter Quell-Ladungsträger Q. Der als Zielpalette Z ausgebildete Ziel-Ladungsträger Z ist auf dem Flurförderzeug 1 angeordnet und kann mit diesem bewegt werden. In der Regel werden bei einem Einsatz in Lagerhäusern mehrere Quellpaletten Q verwendet.

Der Kommissionierroboter 1 verfügt über eine mobile (fahrende) autonome Plattform 2, auf der ein vertikal ausgerichteter Hubmast 3 mit einem daran höhenbeweglich angebrachten Hubschlitten 4 befestigt ist. Am Hubschlitten 4 ist der horizontal ausgerichtete Roboterarm R angebracht, der aus drei Armelementen a1, a2, a3 zusammengesetzt ist. Die drei Armelemente a1, a2, a3 sind über vertikal ausgerichtete Armgelenksdrehachsen A3 und A4 gelenkig miteinander verbunden. Das erste Armelement a1 ist über die vertikal ausgerichtete Armgelenksdrehachse A2 mit dem Hubschlitten 4 verbunden und kann mit diesem vertikal entlang der Hubachse A1 des Hubmastes 3 in vertikaler z-Richtung bewegt werden. Das letzte Armelement a3 ist über eine, in der Figur 1 nicht näher dargestellte, vertikale Handgelenksdrehachse mit dem als Greifer G ausgebildeten Aufnahmewerkzeug G gelenkig verbunden. Die Armelemente a1, a2, a3 sind in vertikaler Richtung untereinander bzw. übereinander angeordnet und bilden eine flache Kinematik des Roboterarms R.

Die Sensorik S ist als optischer Sensor, beispielsweise als 3D-Stereo-Kamera oder als Structured-Light-Kamera oder als Time-of-Flight-Kamera, oder als 3D-Laserscanner ausgebildet.

In der in Figur 1 gezeigten Darstellung ist die Sensorik S zur Ladungsträger-Erkennung und Höhenerkennung am letzten Armelement a3 im Bereich des Greifers G angebracht. Die Sensordaten der Sensorik S werden in einer im Flurförderzeug 1 untergebrachten Datenverarbeitungseinheit D ausgewertet.

Durch die am Roboterarm R montierte Sensorik S wird die Quellpalette Q erfasst. Eine geeignete Algorithmik der Datenverarbeitungseinheit D übernimmt die Berechnung der eigentlichen Position der Quellpalette Q im lokalen Roboter-Koordinatensystem des autonomen Kommissionierfahrzeugs 1.

In der Figur 1 ist ein Koordinatensystem mit den Achsen x, y und z dargestellt, wobei die x-Achse eine horizontale Längsrichtung, die y-Achse eine horizontale Querrichtung und die z-Achse die vertikale Richtung bildet.

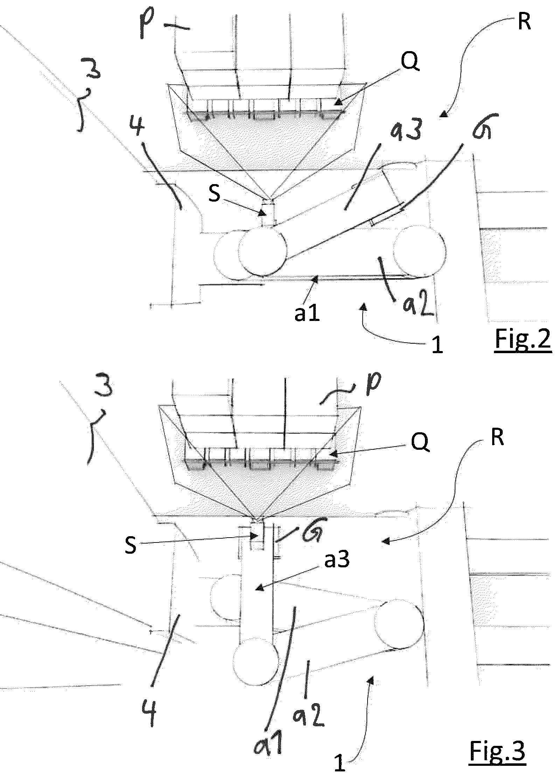

Der Roboterarm R wird zur Ladungsträger-Erkennung so verfahren, dass die Sensorik S frontal zur Quellpalette Q im rechten Winkel ausgerichtet ist, wie in den Figuren 2 und 3 gezeigt.

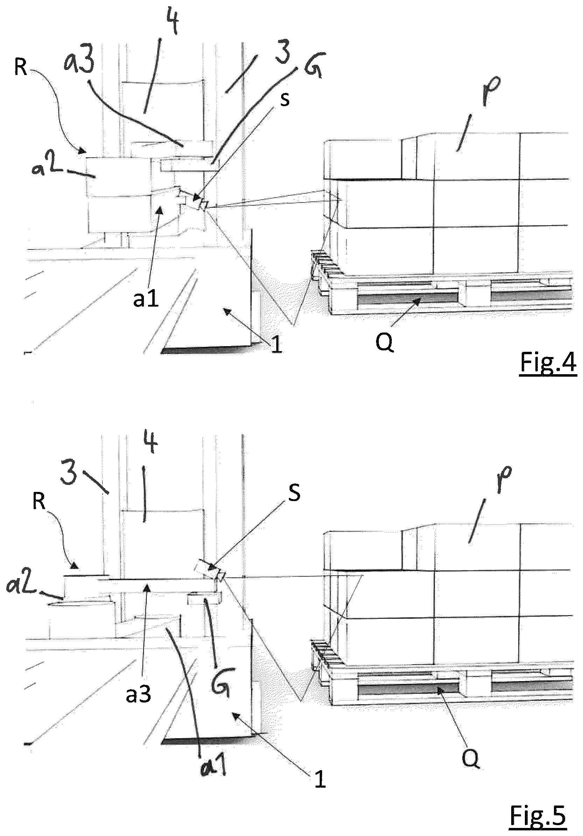

Auf der vertikalen Ebene wird die Sensorik S in einer, bevorzugt nach unten, geeigneten Neigung montiert, wie in den Figuren 4, 5, 6, 8 und 9 gezeigt.

Bei der im vorliegenden Ausführungsbeispiel vorliegenden Verwendung eines 3-Achs-SCARA-Roboterarms R mit vertikalem Hubmast 3 kann die Sensorik S an dem ersten Armelement a1, wie in den Figuren 2, 4 und 8 gezeigt, oder am letzten Armelement a3, wie in den Figuren 1, 3, 5 und 9 gezeigt, montiert werden.

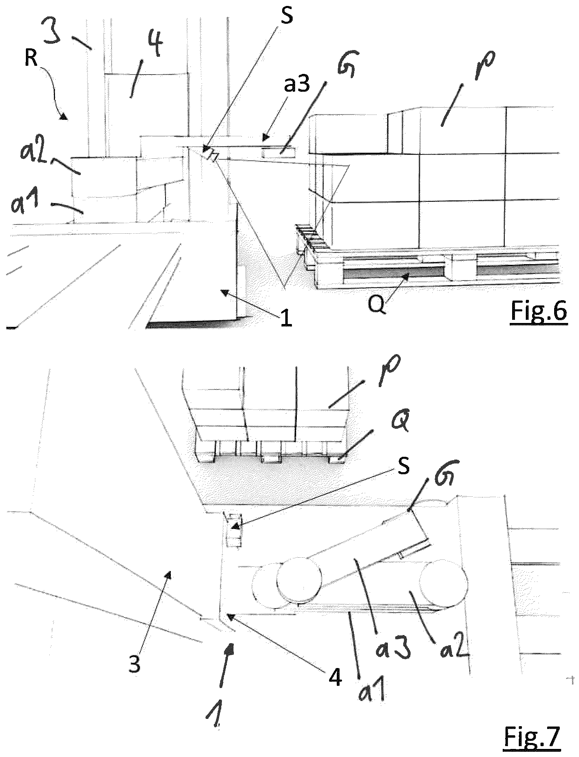

Bei Montage am letzten Armelement a3, kann die Montage des Sensors S in der Nähe des Tool-Center-Point (TCP) in vertikaler Richtung oberhalb des Greifers G erfolgen, wie in den Figuren 1, 3, 5 und 9 gezeigt. Eine weitere Möglichkeit ist die Montage des Sensors S unterhalb des letzten Armelement a3 und in Längsrichtung des Armelements a3 hinter dem Greifer G, wie in Figur 6 gezeigt. Hier wäre eine Teilintegration der Sensorik S in die Armgeometrie möglich.

Alternativ ist eine Montage des Sensors S direkt am Hubschlitten 4 des vertikalen Hubmastes 3 möglich, wie in der Figur 7 dargestellt.

Die Anbauposition der Sensorik S am Roboterarm R beziehungsweise am Flurförderzeug 1 ist auch von der Charakteristik, insbesondere vom Sichtbereich (Field-of-View (FoV)) der Sensorik S abhängig. Die Anbauposition der Sensorik S ist dabei so zu wählen, dass zunächst der komplette Quell-Ladungsträger Q im FoV ist, sowie auch später die komplette Breite und Tiefe der obersten Ebene E der Stückgüter P.

Eine in vertikaler z-Richtung verfahrbare Sensorposition ist dabei besonders sinnvoll, damit zunächst die Quellpalette Q erkannt und lokalisiert werden kann und anschließend durch eine z-Bewegung nach oben die oberste Ebene E der Stückgüter P auf dem Quell-Ladungsträger Q ermittelt werden kann. Bei der Suche der obersten Ebene E der Stückgüter P auf dem Quell-Ladungsträger Q wird insbesondere der Bereich oberhalb des Quellladungsträgers Q mit der Sensorik S und den entsprechenden Algorithmen der Datenverarbeitungseinheit D durchsucht. Die zur Ladungsträger- und Höhenerkennung eingesetzte Sensorik S ist dabei mit einem ausreichend groß dimensionierten FoV auszuwählen, um eine Repositionierung der Sensorik S in x- und y- Richtung, beispielsweise mit dem Roboterarm R oder gar mit dem gesamten Flurförderzeug 1, zu verhindern. Das würde die Performance des Gesamtsystems zu stark einschränken. Beim Parkprozess des Flurförderzeugs 1 vor der Quellpalette Q (im Absolutsystem) auftretende Toleranzen sind hierbei zu berücksichtigen. Zur Erkennung und Lokalisierung des Quellladungsträgers Q sind charakteristische Merkmale vorher bekannt. Es sind also unter Umständen verschiedenen Quellladungsträger Q im System einzulernen, z.B. Euro-Paletten: EPAL1, EPLA2, Kunststoffpaletten, etc.

Mit der Ladungsträger-Erkennung wird die Relativposition von Roboterarm R zur Quellpalette Q in der horizontalen x-y-Ebene bestimmt. Für den Gesamt-Prozess ist auch die Höhe der auf der Quellpalette Q gestapelten Stückgüter P relevant. Hierzu wird auf die zuvor verwendete Sensorik S zurückgegriffen.

Der automatisierte Prozess zur Ladungsträger-Erkennung und Höhenerkennung läuft folgendermaßen ab:
Das autonome Flurförderzeug 1 navigiert in eine definierte Position vor einem Regalfachplatz, in welchem sich die Quellpalette Q befindet, wobei die Navigation im globalen Koordinatensystem des Flurförderzeugs 1 erfolgt.

Der Roboterarm R wird in die entsprechende Position (Figuren 4 bis 6) verfahren, so dass die Ladungsträger-Erkennung gestartet werden kann. Nachdem die Relativposition der Quellpalette Q in der x-y Ebene durch die Ladungsträger-Erkennung bestimmt wurde, wird die Höhenerkennung gestartet und gleichzeitig der Roboterarm R samt Sensorik S vertikal in z-Richtung verfahren.

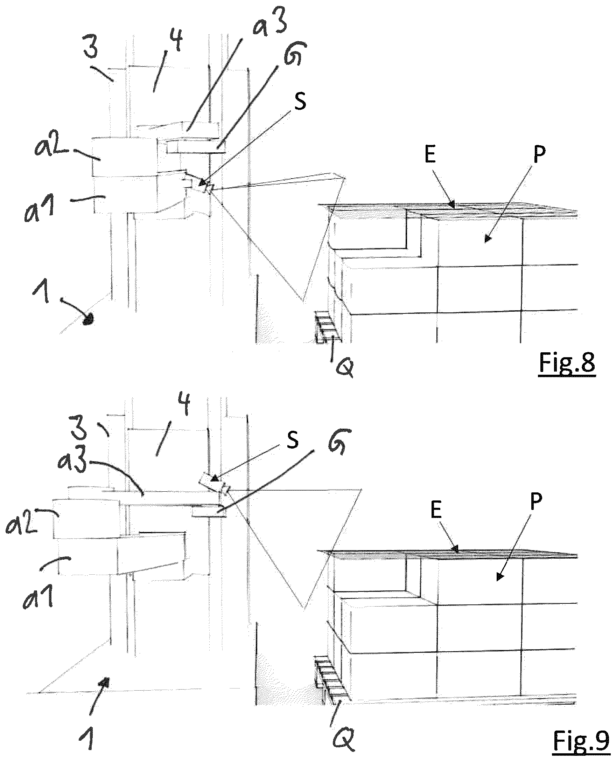

Diese vertikale Bewegung beginnt in einer Ausgangsposition, beispielsweise in einer unteren Ausgangsposition, in welcher die Ladungsträger-Erkennung ein valides Ergebnis geliefert hatte, wie in den Figuren 4 bis 6 dargestellt, und endet, sobald der Höhenerkennungs-Algorithmus der Datenverarbeitungseinheit D die oberste Ebene E der Stückgüter P auf der Quellpalette Q erkannt hat, wie in den Figuren 8 und 9 gezeigt.

Sobald der Prozess erfolgreich abgeschlossen ist, stehen der Datenverarbeitungseinheit D die relevanten 3D-Koordinaten, sowohl translatorisch in x-, y- und z-Richtung, als auch rotatorisch um die z-Achse, zur Verfügung, um den Roboterarm R in die entsprechende Scan-Position zu verfahren, in der die Packstücke P in der obersten Ebene E des Quell-Ladungsträgers Q mit einem Vision-System, das die Sensorik S nutzen kann, zum Greifen durch den Greifer G korrekt erfasst und lokalisiert werden können.

Die Figur 2 zeigt den Kommissionierroboter 1, seitlich neben der Quellpalette Q stehend, in der Draufsicht. Die beispielsweise als 3D-Kamera ausgebildete Sensorik S zur Ladungsträger-Erkennung und Höhenerkennung ist am ersten Armelement a1 des Roboterarms R montiert. Durch die Montage der Sensorik S am ersten Armelement a1, kann die Sensorik S auch im zusammengefalteten Zustand des Roboterarms R, wie in Figur 2 gezeigt, auf die Quell-Palette Q ausgerichtet werden.

Die Figur 3 unterscheidet sich von Figur 2 dadurch, dass die Sensorik S zur Ladungsträger-Erkennung und Höhenerkennung am letzten Armelement a3 des Roboterarms R montiert ist. Dadurch wird eine besonders flexible Ausrichtbarkeit der Sensorik S erreicht.

Die Figuren 4, 5 und 6 zeigen den Kommissionierroboter 1 für die Ladungsträger-Erkennung seitlich neben der Quellpalette Q positioniert. Die nach unten geschwenkte Sensorik S ist jeweils für die Ladungsträger-Erkennung auf die Quellpalette Q ausgerichtet.

In der Figur 4 ist die Sensorik S zur Ladungsträger-Erkennung und Höhenerkennung am ersten Armelement a1 des Roboterarms R montiert. In der Figur 5 ist die Sensorik S zur Ladungsträger-Erkennung und Höhenerkennung am letzten Armelement a3 oberhalb des Greifers G angebracht ist.

In der Darstellung der Figur 6 ist die Sensorik S zur Ladungsträger-Erkennung und Höhenerkennung unterhalb am letzten Armelement a3 und hinter dem Greifer G montiert.

Die Figur 7 zeigt eine Ausführungsform, bei der die Sensorik S zur Ladungsträger-Erkennung und Höhenerkennung am Hubschlitten 4 des Hubmastes 3 angebracht ist.

In den Figuren 8 und 9 ist die Höhenerkennung dargestellt, wobei die Sensorik S am Hubmast 3 in vertikaler z-Richtung nach oben verfahren wurde und die oberste Ebene E der Stückgüter P erfasst.

## Patentansprüche

1. Verfahren zum Kommissionieren von Stückgütern (P), die auf mindestens einem Quell-Ladungsträger (Q) bevorratet und vereinzelt auf mindestens einem Ziel-Ladungsträger (Z) abgelegt werden, wobei die Stückgüter (P) mittels einer auf einem autonomen Flurförderzeug (1) angeordneten Sensorik (S) erfasst und mittels einer auf dem autonomen Flurförderzeug (1) angeordneten Handhabungseinrichtung (R) von dem Quell-Ladungsträger (Q) aufgenommen und auf dem Ziel-Ladungsträger (Z) abgelegt werden, **dadurch gekennzeichnet, dass**
• in einem ersten Schritt eine Ladungsträger-Erkennung durchgeführt wird, indem der Quell-Ladungsträger (Q) mittels der Sensorik (S) erfasst und durch Auswertung der Sensordaten in einer Datenverarbeitungseinheit (D) erkannt und dessen relative Positionierung zum Flurförderzeug (1) in einer horizontalen x-y-Ebene ermittelt wird,
• in einem zweiten Schritt eine Höhenerkennung durchgeführt wird, indem in einem vertikalen Abtastvorgang eine vertikale z-Koordinate mittels der Sensorik (S) abgetastet wird, wobei der Abtastvorgang in einer unteren Ausgangsposition beginnt, in welcher der Quell-Ladungsträger (Q) im ersten Schritt erkannt wurde, und in einer oberen Endposition endet, in welcher durch Auswertung der Sensordaten in der Datenverarbeitungseinheit (D) eine oberste Ebene (E) der Stückgüter (P) erkannt wird, und
• in einem dritten Schritt aus den Auswertungen der Sensordaten der Ladungsträger-Erkennung und der Höhenerkennung eine definierte Scan-Position der Sensorik (S) in einem dreidimensionalen Raum bestimmt wird,
• wobei die Scan-Position relativ zum Quell-Ladungsträger (Q) und der obersten Ebene (E) der zu erkennenden Stückgüter (P) definiert ist, und
• wobei die definierte Scan-Position der Sensorik (S) in dem dreidimensionalen Raum erforderlich ist, damit eine Algorithmik einer Recheneinheit die Stückgüter (P) in der obersten Ebene (E) des Quell-Ladungsträgers (Q) zum Greifen durch einen auf der Handhabungseinrichtung (R) angeordneten Greifer (G) korrekt erfasst und lokalisiert.

2. Verfahren nach Anspruch 1, **dadurch gekennzeichnet, dass** für die Sensorik (S) ein optischer Sensor, insbesondere eine 3D-Kamera oder ein 3D-Laserscanner, verwendet wird.

3. Verfahren nach Anspruch 1 oder 2, **dadurch gekennzeichnet, dass** die Sensorik (S) für den vertikalen Abtastvorgang der Höhenerkennung entlang einer vertikalen z-Achse bewegt wird.

4. Verfahren nach einem der Ansprüche 1 bis 3, **dadurch gekennzeichnet, dass** die Sensorik (S) für den vertikalen Abtastvorgang der Höhenerkennung in einer vertikalen Ebene geschwenkt wird.

5. Verfahren nach einem der Ansprüche 1 bis 4, **dadurch gekennzeichnet, dass** die Sensorik (S) mit der Handhabungseinrichtung (R) bewegt wird.

6. Verfahren nach Anspruch 5, **dadurch gekennzeichnet, dass** die Sensorik (S) bei der Ladungsträger-Erkennung mit der Handhabungseinrichtung (R) auf den Quell-Ladungsträger (Q) ausgerichtet wird.

7. Verfahren nach Anspruch 5, **dadurch gekennzeichnet, dass** die Sensorik (S) bei der Höhenerkennung im Verlauf des vertikalen Abtastvorgangs mit der Handhabungseinrichtung (R) auf die Stückgüter (P) ausgerichtet wird.

8. Verfahren nach einem der Ansprüche 1 bis 7, **dadurch gekennzeichnet, dass** das Flurförderzeug (1) zu dem Quell-Ladungsträger (Q) verfahren wird, und die Ladungsträger-Erkennung gestartet wird, sobald das Flurförderzeug (1) in einem vorbestimmten Abstand vom Quell-Ladungsträger (Q) positioniert ist.

9. Verfahren nach einem der Ansprüche 1 bis 8, **dadurch gekennzeichnet, dass** das Flurförderzeug (1) zu dem Quell-Ladungsträger (Q) verfahren wird, und die Ladungsträger-Erkennung bereits im Anfahrprozess aktiv ist und kontinuierlich nach Quell-Ladungsträgern (Q) scannt, wobei das Flurförderzeug (1) bei Erkennen des Quell-Ladungsträgers (Q) automatisch in einem vorbestimmten Abstand vom erkannten Quell-Ladungsträger (Q) positioniert wird.

10. Verfahren nach einem der Ansprüche 1 bis 9, **dadurch gekennzeichnet, dass** die Sensordaten der Sensorik (S) zusätzlich für ein Kollisionsschutzsystem des Flurförderzeugs (1) verwendet werden.

11. Verfahren nach einem der Ansprüche 1 bis 10, **dadurch gekennzeichnet, dass** die Sensordaten der Sensorik (S) zusätzlich zur Stückgüter-Erkennung verwendet werden.

12. Verfahren nach einem der Ansprüche 1 bis 11, **dadurch gekennzeichnet, dass** die Sensorik (S) auf dem Quell-Ladungsträger (Q) vorgesehene Referenzmarken erfasst, die in der Datenverarbeitungseinheit (D) ausgewertet werden.

13. System zur Durchführung des Verfahrens nach einem der Ansprüche 1 bis 12 mit mindestens einem Quell-Ladungsträger (Q) und mindestens einem Ziel-Ladungsträger (Z) sowie einem autonomen Flurförderzeug (1), auf dem eine Sensorik (S) zur Erfassung der Stückgüter (P) und eine Handhabungseinrichtung (R) zur Handhabung der Stückgüter (P) angeordnet sind, **dadurch gekennzeichnet, dass** die Sensorik (S) dazu ausgebildet ist, den Quell-Ladungsträger (Q) zu erfassen und in einem vertikalen Abtastvorgang eine vertikale z-Koordinate abzutasten, die sich vom Quell-Ladungsträger (Q) bis zu einer obersten Ebene (E) der Stückgüter (P) erstreckt, wobei die Sensorik (S) mit einer Datenverarbeitungseinheit (D) in Wirkverbindung steht, welche dazu eingerichtet ist, in einem ersten Schritt durch Auswertung der Sensordaten eine Ladungsträger-Erkennung und Positionsbestimmung des Quell-Ladungsträgers (Q) in einer horizontalen x-y-Ebene relativ zum Flurförderzeug (1) durchzuführen, in einem zweiten Schritt durch Auswertung der Sensordaten beim vertikalen Abtastvorgang eine Höhenerkennung durchzuführen, und in einem dritten Schritt aus den Auswertungen der Sensordaten der Ladungsträger-Erkennung und der Höhenerkennung eine definierte Scan-Position der Sensorik (S) in einem dreidimensionalen Raum zu bestimmen, wobei die Scan-Position relativ zum Quell-Ladungsträger (Q) und der obersten Ebene (E) der zu erkennenden Stückgüter (P) definiert ist und wobei die definierte Scan-Position der Sensorik (S) in dem dreidimensionalen Raum erforderlich ist, damit eine Algorithmik einer Recheneinheit die Stückgüter (P) in der obersten Ebene (E) des Quell-Ladungsträgers (Q) zum Greifen durch einen auf der Handhabungseinrichtung (R) angeordneten Greifer (G) korrekt erfasst und lokalisiert.

14. System nach Anspruch 13, **dadurch gekennzeichnet, dass** die Handhabungseinrichtung (R) höhenbeweglich ausgebildet ist und die Sensorik (S) an der Handhabungseinrichtung (R) angebracht ist.

15. System nach Anspruch 14, **dadurch gekennzeichnet, dass** die Handhabungseinrichtung (R) einen vertikal ausgerichteten Hubmast (3) und einen daran höhenbeweglich angebrachten, horizontal ausgerichteten Roboterarm (R) mit mehreren vom Hubmast (3) ausgehend aneinander gereihten Armelementen (a1, a2, a3) mit aufsteigender Nummerierung umfasst, welche über Armgelenke mit vertikalen Armgelenksdrehachsen ( A2, A3, A4) mit aufsteigender Nummerierung verfügen, wobei das letzte am äußeren Reihenende angeordnete Armelement (a3) über ein Handgelenk mit vertikaler Handgelenksdrehachse mit dem Greifer (G) zur Aufnahme der Stückgüter (P) verbunden ist.

16. System nach Anspruch 15, **dadurch gekennzeichnet, dass** die Sensorik (S) an einem am Hubmast (3) höhenbeweglich angebrachten Hubschlitten (4) angebracht ist.

17. System nach Anspruch 15, **dadurch gekennzeichnet, dass** die Sensorik (S) an einem der Armelemente (a1, a2, a3) angebracht ist.

18. System nach Anspruch 17, **dadurch gekennzeichnet, dass** die Sensorik (S) am ersten Armelement (a1) angebracht ist.

19. System nach Anspruch 17, **dadurch gekennzeichnet, dass** die Sensorik (S) am letzten Armelement (a3) angebracht ist.

20. System nach Anspruch 19, **dadurch gekennzeichnet, dass** die Sensorik (S) im Bereich des Greifers (G) angebracht ist.

## Claims

1. Method for picking piece goods (P), which are stored on at least one source load carrier (Q) and are individually set down on at least one target load carrier (Z), wherein the piece goods (P) are sensed by means of a sensor system (S) arranged on an autonomous mobile robot (1) and are picked up from the source load carrier (Q) and set down on the target load carrier (Z) by means of a handling device (R) arranged on the autonomous mobile robot (1), **characterized in that**
• in a first step, a load carrier detection is carried out, **in that** the source load carrier (Q) is sensed by means of the sensor system (S) and detected by evaluation of the sensor data in a data processing unit (D) and its relative position in relation to the mobile robot (1) is determined in a horizontal x-y plane,
• in a second step, a height detection is carried out, **in that** a vertical z coordinate is scanned by means of the sensor system (S) in a vertical scanning operation, wherein the scanning operation begins in a lower starting position, in which the source load carrier (Q) was detected in the first step, and ends in an upper end position, in which an uppermost plane (E) of the piece goods (P) is detected by evaluation of the sensor data in the data processing unit (D), and
• in a third step, a defined scanned position of the sensor system (S) in a three-dimensional space is determined from the evaluations of the sensor data of the load carrier detection and the height detection,
• wherein the scanned position is defined relative to the source load carrier (Q) and the uppermost plane (E) of the piece goods (P) to be detected, and
• wherein the defined scanned position of the sensor system (S) in the three-dimensional space is required in order that a set of algorithms of a computing unit correctly senses and localizes the piece goods (P) in the uppermost plane (E) of the source load carrier (Q) for gripping by a gripper (G) arranged on the handling device (R) .

2. Method according to Claim 1, **characterized in that** an optical sensor, in particular a 3D camera or a 3D laser scanner, is used for the sensor system (S).

3. Method according to Claim 1 or 2, **characterized in that** the sensor system (S) is moved along a vertical z axis for the vertical scanning operation of the height detection.

4. Method according to one of Claims 1 to 3, **characterized in that** the sensor system (S) is pivoted in a vertical plane for the vertical scanning operation of the height detection.

5. Method according to one of Claims 1 to 4, **characterized in that** the sensor system (S) is moved by the handling device (R).

6. Method according to Claim 5, **characterized in that**, in the load carrier detection, the sensor system (S) is aligned with the source load carrier (Q) by the handling device (R).

7. Method according to Claim 5, **characterized in that**, in the height detection, the sensor system (S) is aligned with the piece goods (P) by the handling device (R) in the course of the vertical scanning operation.

8. Method according to one of Claims 1 to 7, **characterized in that** the mobile robot (1) is moved to the source load carrier (Q), and the load carrier detection is started as soon as the mobile robot (1) is positioned at a predetermined distance from the source load carrier (Q).

9. Method according to one of Claims 1 to 8, **characterized in that** the mobile robot (1) is moved to the source load carrier (Q), and the load carrier detection is already active in the approach process and scans continuously for source load carriers (Q), wherein, when the source load carrier (Q) is detected, the mobile robot (1) is automatically positioned at a predetermined distance from the detected source load carrier (Q).

10. Method according to one of Claims 1 to 9, **characterized in that** the sensor data of the sensor system (S) are additionally used for a collision protection system of the mobile robot (1).

11. Method according to one of Claims 1 to 10, **characterized in that** the sensor data of the sensor system (S) are additionally used for piece good detection.

12. Method according to one of Claims 1 to 11, **characterized in that** the sensor system (S) senses reference marks provided on the source load carrier (Q), which are evaluated in the data processing unit (D).

13. System for carrying out the method according to one of Claims 1 to 12 with at least one source load carrier (Q) and at least one target load carrier (Z) and also an autonomous mobile robot (1), on which a sensor system (S) for sensing the piece goods (P) and a handling device (R) for handling the piece goods (P) are arranged, **characterized in that** the sensor system (S) is configured to sense the source load carrier (Q) and to scan in a vertical scanning operation a vertical z coordinate which extends from the source load carrier (Q) to the uppermost plane (E) of the piece goods (P), wherein the sensor system (S) is in operative connection with a data processing unit (D) which is configured to carry out in a first step, by evaluation of the sensor data, a load carrier detection and positional determination of the source load carrier (Q) in a horizontal x-y plane relative to the mobile robot (1), to carry out in a second step, by evaluation of the sensor data during the vertical scanning operation, a height detection, and to determine in a third step, from the evaluations of the sensor data of the load carrier detection and the height detection, a defined scanned position of the sensor system (S) in a three-dimensional space, wherein the scanned position is defined relative to the source load carrier (Q) and the uppermost plane (E) of the piece goods (P) to be detected, and wherein the defined scanned position of the sensor system (S) in the three-dimensional space is required in order that a set of algorithms of a computing unit correctly senses and localizes the piece goods (P) in the uppermost plane (E) of the source load carrier (Q) for gripping by a gripper (G) arranged on the handling device (R).

14. System according to Claim 13, **characterized in that** the handling device (R) is configured as movable in height and the sensor system (S) is attached to the handling device (R).

15. System according to Claim 14, **characterized in that** the handling device (R) comprises a vertically aligned lifting mast (3) and a horizontally aligned robot arm (R) which is attached to the said lifting mast in a height-movable manner and has a number of arm elements (a1, a2, a3) arranged in series with one another from the lifting mast (3) and with ascending numbering, which have arm joints with vertical arm-joint rotation axes (A2, A3, A4) with ascending numbering, wherein the last arm element (a3), arranged at the outer end of the series, is connected by way of a wrist with a vertical wrist rotation axis to the gripper (G) for picking up the piece goods (P).

16. System according to Claim 15, **characterized in that** the sensor system (S) is attached to a lifting carriage (4) attached in a height-movable manner to the lifting mast (3).

17. System according to Claim 15, **characterized in that** the sensor system (S) is attached to one of the arm elements (a1, a2, a3).

18. System according to Claim 17, **characterized in that** the sensor system (S) is attached to the first arm element (a1).

19. System according to Claim 17, **characterized in that** the sensor system (S) is attached to the last arm element (a3).

20. System according to Claim 19, **characterized in that** the sensor system (S) is attached in the region of the gripper (G).

## Revendications

1. Procédé de préparation de commandes de marchandises de détail (P) qui sont stockées sur au moins un porteur de charge source (Q) et déposées une à une sur au moins un porteur de charge cible (Z), les marchandises de détail (P) étant détectées au moyen d'un système de détection (S) disposé sur un chariot de manutention autonome (1) et étant prélevées du porteur de charge source (Q) puis déposées sur le porteur de charge cible (Z) au moyen d'un dispositif de manipulation (R) disposé sur le chariot de manutention autonome (1), **caractérisé en ce que**
• dans une première étape, une reconnaissance de porteur de charge est effectuée par détection du porteur de charge source (Q) au moyen du système de détection (S) et par évaluation des données de capteur dans une unité de traitement de données (D) et par détermination de son positionnement relatif par rapport au chariot de manutention (1) dans un plan x-y horizontal,
• dans une deuxième étape, une reconnaissance de hauteur est effectuée en balayant, au cours d'une opération de balayage vertical, une coordonnée z verticale au moyen du système de détection (S), l'opération de balayage commençant dans une position de départ inférieure dans laquelle le porteur de charge source (Q) a été reconnu lors de la première étape, et se termine dans une position finale supérieure, dans laquelle un plan le plus élevé (E) des marchandises de détail (P) est reconnu par l'évaluation des données de capteur dans l'unité de traitement des données (D), et
• dans une troisième étape, une position de balayage définie du système de détection (S) dans un espace tridimensionnel est déterminée à partir des évaluations des données de capteur de la reconnaissance du porteur de charge et de la reconnaissance de hauteur,
• la position de balayage étant définie par rapport au porteur de charge source (Q) et au plan le plus élevé (E) des marchandises de détail (P) à reconnaître, et
• la position de balayage définie du système de détection (S) dans l'espace tridimensionnel étant nécessaire pour qu'un algorithme d'une unité de calcul détecte et localise correctement les marchandises de détail (P) dans le plan le plus élevé (E) du porteur de charge source (Q) en vue d'une préhension par un préhenseur (G) disposé sur le dispositif de manipulation (R).

2. Procédé selon la revendication 1, **caractérisé en ce qu'**un capteur optique, en particulier une caméra 3D ou un dispositif de balayage à laser 3D, est utilisé pour le système de détection (S).

3. Procédé selon la revendication 1 ou 2, **caractérisé en ce que** le système de détection (S) est déplacé le long d'un axe z vertical pour l'opération de balayage vertical de la reconnaissance de hauteur.

4. Procédé selon l'une des revendications 1 à 3, **caractérisé en ce que** le système de détection (S) est pivoté dans un plan vertical pour l'opération de balayage vertical de la reconnaissance de hauteur.

5. Procédé selon l'une des revendications 1 à 4, **caractérisé en ce que** le système de détection (S) est déplacé avec le dispositif de manipulation (R).

6. Procédé selon la revendication 5, **caractérisé en ce que** le système de détection (S), lors de la reconnaissance du porteur de charge, est aligné sur le porteur de charge source (Q) avec le dispositif de manipulation (R).

7. Procédé selon la revendication 5, **caractérisé en ce que** le système de détection (S), lors de la reconnaissance de hauteur, est aligné sur les marchandises de détail (P) avec le dispositif de manipulation (R) au cours de l'opération de balayage vertical.

8. Procédé selon l'une des revendications 1 à 7, **caractérisé en ce que** le chariot de manutention (1) est déplacé vers le porteur de charge source (Q) et la reconnaissance de porteur de charge est démarrée dès que le chariot de manutention (1) est positionné à une distance prédéterminée du porteur de charge source (Q).

9. Procédé selon l'une des revendications 1 à 8, **caractérisé en ce que** le chariot de manutention (1) est déplacé vers le porteur de charge source (Q), et la reconnaissance de porteur de charge est déjà active dans le processus de démarrage et balaye continuellement à la recherche de porteurs de charge sources (Q), le chariot de manutention (1) étant automatiquement positionné à une distance prédéterminée du porteur de charge source (Q) reconnu lors de la reconnaissance du porteur de charge source (Q).

10. Procédé selon l'une des revendications 1 à 9, **caractérisé en ce que** les données de capteur du système de détection (S) sont en plus utilisées pour un système de protection contre les collisions du chariot de manutention (1).

11. Procédé selon l'une des revendications 1 à 10, **caractérisé en ce que** les données de capteur du système de détection (S) sont en plus utilisées pour la reconnaissance de marchandises de détail.

12. Procédé selon l'une des revendications 1 à 11, **caractérisé en ce que** le système de détection (S) détecte des repères de référence prévus sur le porteur de charge source (Q), lesquels sont évalués dans l'unité de traitement de données (D).

13. Système pour la mise en œuvre du procédé selon l'une des revendications 1 à 12, comprenant au moins un porteur de charge source (Q) et au moins un porteur de charge cible (Z) ainsi qu'un chariot de manutention autonome (1), sur lequel sont disposés un système de détection (S) destiné à détecter les marchandises de détail (P) et un dispositif de manipulation (R) destiné à manipuler les marchandises de détail (P), **caractérisé en ce que** le système de détection (S) est configuré pour détecter le porteur de charge source (Q) et pour, dans une opération de balayage vertical, balayer une coordonnée z verticale qui s'étend du porteur de charge source (Q) jusqu'à un plan le plus élevé (E) des marchandises de détail (P), le système de détection (S) étant en liaison fonctionnelle avec une unité de traitement de données (D), laquelle est conçue pour, dans une première étape, par évaluation des données de capteur, effectuer une reconnaissance de porteur de charge et une détermination de position du porteur de charge source (Q) dans un plan x-y horizontal par rapport au chariot de manutention (1), dans une deuxième étape, par évaluation des données de capteur lors de l'opération de balayage vertical, effectuer une reconnaissance de hauteur et, dans une troisième étape, déterminer une position de balayage définie du système de détection (S) dans un espace tridimensionnel à partir des évaluations des données de capteur de la reconnaissance de porteur de charge et de la reconnaissance de hauteur, la position de balayage étant définie par rapport au porteur de charge source (Q) et au plan le plus élevé (E) des marchandises de détail (P) à reconnaître, et la position de balayage définie du système de détection (S) dans l'espace tridimensionnel étant nécessaire pour qu'un algorithme d'une unité de calcul détecte et localise correctement les marchandises de détail (P) dans le plan le plus élevé (E) du porteur de charge source (Q) en vue de la préhension par un préhenseur (G) disposé sur le dispositif de manipulation (R).

14. Système selon la revendication 13, **caractérisé en ce que** le dispositif de manipulation (R) est configuré mobile en hauteur et le système de détection (S) est monté sur le dispositif de manipulation (R).

15. Système selon la revendication 14, **caractérisé en ce que** le dispositif de manipulation (R) comprend un mât de levage (3) orienté verticalement et un bras de robot (R) orienté horizontalement, monté mobile en hauteur sur celui-ci, comprenant plusieurs éléments formant bras (a1, a2, a3) numérotés par ordre croissant alignés les uns sur les autres à partir du mât de levage (3), lesquels disposent d'articulations de bras pourvues d'axes de rotation d'articulation de bras (A2, A3, A4) verticaux à numérotation croissante, le dernier élément formant bras (a3) disposé à l'extrémité extérieure de la série étant relié au préhenseur (G) destiné à recevoir les marchandises de détail (P) par le biais d'une articulation de main pourvue d'un axe de rotation d'articulation de main.

16. Système selon la revendication 15, **caractérisé en ce que** le système de détection (S) est monté sur un chariot de levage (4) monté mobile en hauteur sur le mât de levage (3).

17. Système selon la revendication 15, **caractérisé en ce que** le système de détection (S) est monté sur l'un des éléments formant bras (a1, a2, a3).

18. Système selon la revendication 17, **caractérisé en ce que** le système de détection (S) est monté sur le premier élément formant bras (a1).

19. Système selon la revendication 17, **caractérisé en ce que** le système de détection (S) est monté sur le dernier élément formant bras (a3).

20. Système selon la revendication 19, **caractérisé en ce que** le système de capteurs (S) est monté dans la zone du préhenseur (G).
